Europäisches Patentamt

European Patent Office

Office européen des brevets

(11) Publication number: **0 178 944**
**B1**

## (12) EUROPEAN PATENT SPECIFICATION

(45) Date of publication of patent specification: **07.06.89**

(51) Int. Cl.⁴: **B 23 Q 3/157,** B 25 J 18/06

(21) Application number: **85307539.8**

(22) Date of filing: **18.10.85**

(54) **Industrial robots.**

(30) Priority: **19.10.84 JP 219491/84**

(43) Date of publication of application:
**23.04.86 Bulletin 86/17**

(45) Publication of the grant of the patent:
**07.06.89 Bulletin 89/23**

(84) Designated Contracting States:
**DE FR GB NL**

(56) References cited:
**EP-A-0 088 131**
**US-A-3 473 419**
**US-A-4 227 853**
**US-A-4 341 502**

(73) Proprietor: **SONY CORPORATION**
**7-35 Kitashinagawa 6-Chome Shinagawa-ku**
**Tokyo 141 (JP)**

(72) Inventor: **Kimura, Akira c/o Patents Division**
**Sony Corporation 6-7-35 Kitashinagawa**
**Shinagawa-ku Tokyo 141 (JP)**

(74) Representative: **Thomas, Christopher Hugo**
**et al**
**D Young & Co 10 Staple Inn**
**London WC1V 7RD (GB)**

**Description**

This invention relates to industrial robots and, more particularly, to a multi-function industrial robot capable of performing a plurality of different operations, using different, selected tools.

Industrial robots are now known for use in various industries because of accuracy of repetition and high efficiency, and many such robots are employed on assembly lines, in which the robots are required to perform numerous different sequential operations, such as positioning workpieces in a working position, tightening bolts or screws, and welding. In order to be able to perform these different operations, the robots must be equipped with several different tools at their working ends. Therefore, when a single robot is used to perform various operations, it is necessary to change tools according to the required operations and predetermined schedule of operations.

There are typically two known ways herewith acknowledged as forming the basis for the precharacterising part of claim 1 to change tools to enable multi-operations using a single robot, one of which is to stock all necessary tools in a tool stocker, with the tools specifically arranged in the tool stocker so that the robot can pick up the necessary tools according to a programmed schedule of operations. In this technique, the robot is programmed to move its working end to a point opposite the tool stocker at the conclusion of every operation, in order to change tools. This involves a waste of time and energy in repeatedly moving the working end of the robot between the tool stocker and the working position, which clearly lowers the robot's efficiency. Moreover, this drop in the robot efficiency becomes more significant as the number of operations increases.

Alternatively to avoid these extra motions of the robot's working end, it is known to provide a turret for mounting the necessary tools. The turret is actuated by a turret controlling servo that positions the tool intended to perform the next operation opposite the work position, which eliminates the extra movements of the working end between the working position and the tool stocker. Nevertheless, this system requires a turret controlling servo apparatus that generally involves at least a servo motor and a reduction gear assembly and, because of the additional weight of the turret caused by the tools and the turret controlling servo, the moment of inertia of the robot arm is increased significantly. This increased inertia limits the top speed of the working end, as otherwise there is not sufficient accuracy in positioning the working end at the working position. Furthermore, even at a limited arm speed, back-lash inherent in the reduction gear assembly lowers the accuracy in positioning of the working end.

According to the present invention there is provided an industrial robot for use with at least two tools, the robot comprising:
  a frame;
  arm means pivotally supported at one end on said frame;
  a spindle rotatably supported at an end of said arm means opposite to said frame, said spindle being arranged to extend vertically from said frame; and
  means for rotating said spindle;
  characterised by:
  means for vertically moving said spindle;
  a turret base fixed to one end of said spindle;
  a turret shaft rotatably supported by said turret base;
  a turret head fixed at one end of said turret shaft and having said tools mounted thereon;
  means for selectively transmitting rotational motion of said spindle to said turret shaft, said selection being effected by vertical movement of said spindle, whereby said turret head is rotated to select one of said tools;
  means for selectively locking said turret head from rotation; and
  means for releasing said locking means to permit rotation of said turret head.

In this embodiment of the present invention, a multi-function industrial robot employs a turret mounting a plurality of tools used to perform various operations, and a turret controlling servo having no independent power source is used to drive the turret. In this robot an arm is pivotally supported at one end, and a vertical spindle is rotatably supported at the other end of the arm. A drive system for rotating and vertically moving the spindle is provided, and a turret base is fixed to one end of the spindle, with a turret shaft being rotatably supported by the turret base. The turret head is fixed to one end of the turret shaft and has the appropriate tools mounted thereon. A rotary motion transmitting system transmits the rotary motion of the spindle to the turret shaft.

In preferred embodiments of the present invention, the robot further comprises a mechanism for locking the turret head, as well as a device for releasing the locking mechanism. The rotary motion transmitting system has a first circular gear, a cylindrical member that is fixed at the other end of the arm around the spindle and on which the first circular gear is mounted, and a second gear fixed to the turret shaft. The turret shaft passes into the turret base and the second gear is fixed to the turret shaft at the other end of the turret shaft, such that the first and second gears engage at the highest position of the spindle, and the locking means mechanism is released by the releasing device.

The turret head is locked by the locking mechanism any time that the shaft is positioned other than at the highest position. In one embodiment, the number of gear teeth in the first and second gears is equal, and the angle of the turret shaft relative to the spindle is approximately 45 degrees.

Thus a multi-function industrial robot comprises a movable arm member on which is mounted a working end of the robot for movement within a robot coordinate system. The movable arm member includes a rotary component rotatable about a first axis and a servo system associated with the movable member for driving the movable arm member according to a preset programme. The servo system drives the rotary component of the movable arm member to rotate the rotary component of the movable arm member about the first axis, and a rotary tool mount is attached to the working end of the movable arm member for mounting a plurality of tools. The rotary mount is rotatable about a second axis for aligning a selected one of the tools mounted thereon with a working position. A power transmission system transmits rotation of the rotary component of the movable arm member to the rotary tool mount for varying the angular orientation of the tools for aligning the tool with the working position. The power transmission system also disconnects the rotary component of the movable arm member and the rotary tool mount, while one of the tools that has been aligned in the working position is in operation.

The invention will now be described by way of example with reference to the accompanying drawings, throughout which like parts are referred to by like references, and in which:

Figure 1 is a perspective view of an embodiment of multi-function industrial robot according to the present invention;

Figure 2 is a side elevation of a portion of the robot of Figure 1, showing a tool changing operation;

Figure 3 is a side elevation in partial cross-section of a portion of the robot, in which a selected tool is ready for operation;

Figure 4 is a side elevation in partial cross-section of a portion of the robot, in which the working end is aligned with its working position;

Figure 5 is a bottom plan view of a turret attached to a wrist portion of the robot for carrying a plurality of tools;

Figure 6 is an exploded perspective view of the turret of Figure 5;

Figure 7 is a cross-sectional view taken along section lines VII—VII of Figure 2;

Figure 8 is a cross-sectional view taken along section lines VIII—VIII of Figure 4;

Figure 9 is a cross-sectional view taken along section lines IX—IX of Figure 2; and

Figure 10 is a cross-sectional view taken along section lines X—X of Figure 4.

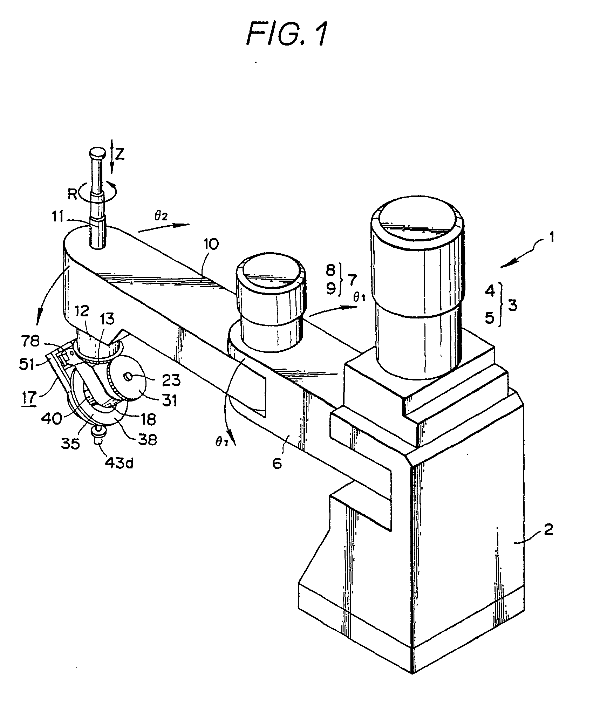

Figure 1 shows an embodiment of multi-function industrial robot 1 having first and second horizontally pivotable arms 6 and 10, in which the first pivotal arm 6 is supported by a base frame 2 for pivotal movement about a first vertical axis. The first pivotal arm 6 is operably connected to a first servo 3, which comprises a first servo motor 4 and a first reduction gear assembly 5, and the first pivotal arm 6 pivotably supports the second pivotal arm 10 at its free end. The second pivotal arm 10 is horizontally pivotable about a second vertical axis, and is connected to a second servo 7, which comprises a second servo motor 8 and a second reduction gear assembly 9.

A vertically movable spindle 11 extends through the free end of the second pivotal arm 10 and is movable along a third vertical axis Z for raising and lowering a turret head 17 along the third vertical axis. The vertically movable spindle 11 is also rotatable about the third vertical axis to rotate the turret head 17 and select one of a plurality of tools, one of which is shown typically at 43d in Figure 1, that are held by the turret head 17. To allow rotation of the vertically movable spindle 11 a bearing (not shown) is provided in the free end of the second pivotal arm 10. The vertically movable spindle 11 is connected to a third servo (not shown) housed in the free end of the second pivotal arm 10, and this third servo may comprise a third servo motor and a third reduction gear assembly for driving the vertically movable spindle 11 vertically along the third vertical axis Z and to rotate about that third axis.

All of the servos that are employed include rotation angle sensors for monitoring the angular displacement of the corresponding arms 6 and 10 and the spindle 11, and rotation speed sensors for monitoring the speed of the arms 6 and 10, and the spindle 11. The third servo can also include a height sensor for monitoring the vertical displacement of the spindle 11 and, thus, detecting the vertical position of the working end of the robot 1. These sensors generate sensor signals serving as feedback signals for performing feedback or feedforward control for the first, second and third servos in the manner of known robots of this kind. Although this embodiment is described in terms of three perpendicular axes, two horizontally pivotable arms, and a single vertically movable spindle, same principle being applicable to any robot of the known type to perform a plurality of different operations in three dimensions.

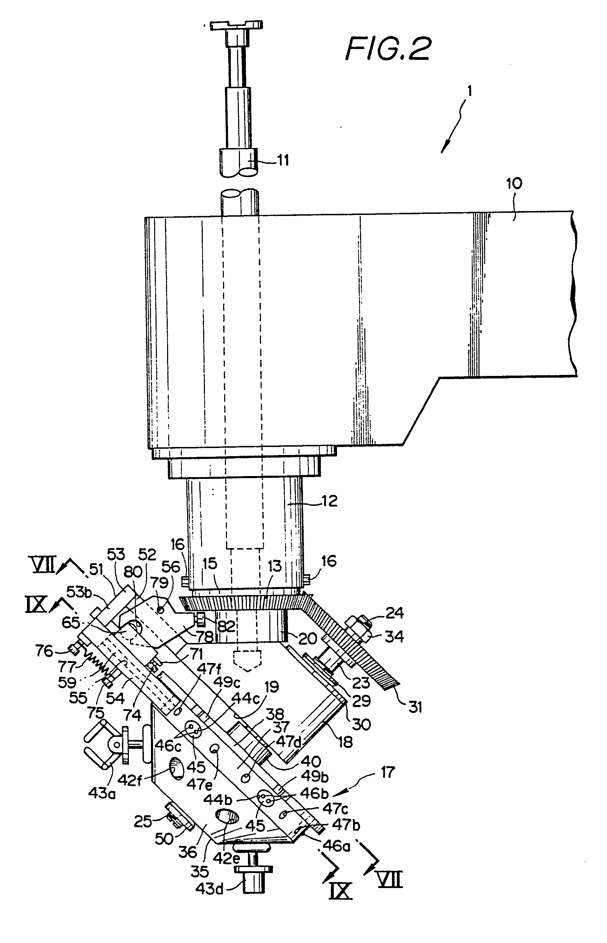

As shown in Figures 2 to 4, a cylindrical extension 12 extends downwardly from a lower surface of the second pivotal arm 10, and is coaxial with the spindle 11. A lower end 14 of the cylindrical extension 12 opens downwardly, and a bevel gear 13 having a cylindrical upper section 15 engages the lower end 14 of the cylindrical extension 12 and is secured thereto by one or more bolts 16. Because the cylindrical extension 12 is rigidly fixed to the second pivotal arm 10, the bevel gear 13 does not rotate relative to the second pivotal arm 10 and thus serves as a stationary gear.

The vertically movable spindle 11 extends downwardly through the bevel gear 13 and is connected to a turret base 18 at its lower end. The turret base 18 has a lower planar base surface 19 that is oblique to the third vertical robot axis Z at an angle of approximately 45°. The turret base 18 also has an upward extension 20 through which the turret base 18 is connected to the lower end of the spindle 11. The turret base 18 has a through opening 21 extending substantially perpendicular to the planar base surface 19, and a pair of bearings 22 and 22' are disposed at opposite ends of the through opening 21. A turret shaft 23 extends through the through opening 21, is rotatably supported by the bearings 22 and 22', and has threaded ends 24 and 25 with an intermediate threaded section 26. The turret shaft 23 also has a section 27 that tapers towards the lower threaded end 25, and the upper end of the tapered section 27 forms a shoulder that abuts the bearing 22' by means of a washer 28. A nut 29 and a washer 30 are threaded over the intermediate threaded section 26 and serve to retain the upper bearing 22. Thus, the turret shaft 23 is retained in place in the turret base 18 by the shoulder and by the nut 29.

With this arrangement, the turret shaft 23 is supported by the turret base 18 with its longitudinal axis lying oblique to the third vertical robot axis Z at an angle of about 45°. A bevel gear 31 is mounted on the upper end of the turret shaft 23 near the threaded end 24, and the bevel gear 31 is substantially identical to the stationary bevel gear 13 and has an equal diameter and an equal number of gear teeth. The bevel gear 31 is fixed to the turret shaft 23 by keys 33 and a fastener nut 34 engaging the threaded end 24, whereby the bevel gear 31 is rotatable with the turret shaft 23.

Because the spindle 11 moves vertically along the third vertical robot axis Z by means of the third servo, the turret base 18 also moves vertically along the same robot axis. At the uppermost position of the spindle 11, the turret base 23 will move the bevel gear 31 into engagement with the stationary bevel gear 13, whereas when the spindle 11 is lowered, the bevel gear 31 is released from engagement with the stationary bevel gear 13.

A turret 35 is mounted on the tapered section 27 of the turret shaft 23 and has a generally conical tool mounting section 36 and a cylindrical extension 37, which extend axially from the peripheral edge of the tool mounting section 36, and has an outward flange 38 at its upper edge. The conical tool mounting section 36 defines on its upper face a conical recess 39, and a boss 40 extends upwardly through the conical recess 39. The boss 40 is long enough to surround almost the entire length of the tapered section 27 of the turret shaft 23 and, in order to engage the tapered section 27 of the turret shaft 23, the boss 40 has a tapered through opening 41 conforming to the taper of the tapered section 27. A nut 50 engages the threaded end 25 of the turret shaft 23 to fix the turret 35 onto the turret shaft 23.

The conical tool mounting section 36 of the turret 35 has a plurality of tool mounting holes 42a, 42b, 42c, 42d, 42e and 42f that are arranged radially and symmetrically about the tapered periphery of the tool mounting section 36, and in this embodiment are spaced at about 60°. Each of the tool mounting holes 42a, 42b, 42c, 42d, 42e and 42f extends substantially perpendicular to the tapered surface of the tool mounting section 36 between the tapered periphery of the tool mounting section 36 at one end and the conical recess 39 at the other end.

The tools 43a and 43d have mounting sockets 43a' and 43d' that are engageable with corresponding tool mounting holes 42a and 42d, and in this embodiment the tools 43a and 43d are spaced about the conical tool mounting section 36 of the turret 35 at intervals of 180°. However, the arrangement and number of tools can be modified in many ways.

A plurality of connector terminal rests 44a, 44b, 44c, 44d, 44e and 44f are formed around the periphery of the cylindrical upward extension 37 of the turret 35, and are arranged opposite respective tool mounting holes 42a, 42b, 42c, 42d, 42e and 42f. Pairs of connector terminals 46a, 46b, 46c, 46d, 46e and 46f, surrounded by respective insulators 45a, 45b, 45c, 45d, 45e and 45f, are disposed within each connector terminal rest 44a, 44b, 44c, 44d, 44e and 44f, respectively. In this embodiment, the ends of the connector terminals 46 extend slightly beyond the outer periphery of the upward extension 37.

Holes 47a to 47l pass through the periphery of the upward extension 37 and extend radially, and two holes are arranged between each pair of connector terminal rests 44. Pneumatic or hydraulic lines 48a to 48l having respective outer flanges 48a' to 48l' pass through the holes 47a to 47l, and the flanges 48a' to 48l' rest on the outer peripheral surface of the upward extension 37 and project slightly therefrom.

Each of the tools 43a and 43d, as well as the tools 43b, 43c, 43e and 43f if necessary, are built as assemblies including appropriate sensors (not shown) for monitoring operation of the tool. The sensors are connected to a controller through the connector terminals 46a and 46d corresponding to the tools 43a and 43d, and the tools 43a and 43d are also built with one or more purge-air passages (not shown). The purge-air passages are connected to the corresponding pneumatic lines 48a, 48b and 48g, 48h.

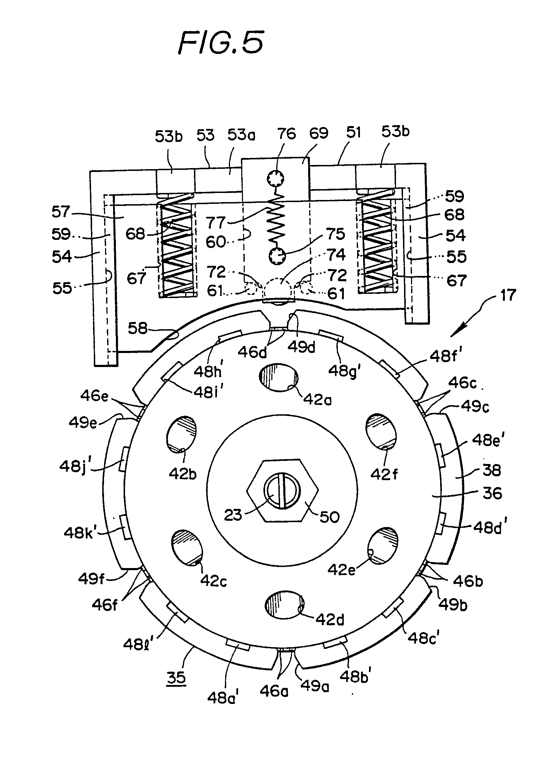

The flange 38 of the cylindrical extension 37 has cut-outs 49a, 49b, 49c, 49d, 49e and 49f, each of which has a trapezoidal configuration in plan view, and which are radially symmetrically arranged at positions opposite the tool mounting holes 42a, 42b, 42c, 42d, 42e and 42f, respectively, as shown in Figure 5.

As shown in Figures 2 to 4, the tool mounting holes 42a and 42b, 42c, 42d, 42e and 42f are so arranged that the axis of the tool that is vertically aligned also lies in alignment with the third vertical robot axis Z, and in the following description the tool position in which the axis of the tool 43 is in alignment with this third vertical robot axis will be referred to as the "operating position of the tool". On the other hand, tool positions in which the axis of the tool 43 is offset from or oblique to the third vertical robot axis will be referred to as a "non-operating position of the tool". Because the turret 35 is firmly secured to the turret shaft 23 by the nut 50 at an angle of 45° with respect to the third vertical robot axis, the tools 43a and 43d must follow a course passing through the operating position as the turret 35 rotates. Furthermore, because the tool mounting holes 42a, 42b, 42c, 42d, 42e and 42f are arranged at every 60°, one of the respective tool mounting holes 42a, 42b, 42c, 42d, 42e and 42f will coincide with an operating position with every 60° of rotation of the turret 35.

The tools 43a and 43d are mounted on the turret 35 at an angular spacing of 180°, so that when the tool 43d is moved to a non-operating position by 180° of turret rotation, the tool 43a is moved to the operating position. When a tool 43 is in the operating position, it is vertically movable along the third vertical robot axis Z together with the turret 35, and is rotatable in the direction R in Figure 1 about the third vertical robot axis Z, together with the vertically movable spindle 11. Therefore, a tool 43 in the operating position is movable towards and away from the workpiece according to vertical movement of the spindle 11.

In order to change the tool 43 that is being used, the turret 35 must be raised away from the workpiece. At the predetermined uppermost position of the turret, the bevel gear 31 that is secured to the turret shaft 23 comes into engagement with the stationary bevel gear 13, as shown in Figure 1, and when the spindle 11 is rotated about the third vertical robot axis Z, the turret base 18 that is secured to the lower end of the spindle 11 and the turret shaft 23 rotate through the same angle. Thus, rotation of the spindle 11 causes both a reorientation of the turret 35 and a rotation of the turret 35, thereby to move a new tool 43 into its operating position. In practice, the rotational angle of the spindle 11 will match the angular displacement required to move the appropriate tool 43 suitable for the next required operation into its operating position.

Therefore, as seen from the above, rotation of the spindle 11 is converted into angular displacement of the tools 43 through a corresponding angle, and this allows control of the tool position simply by controlling rotation of the spindle 11 about the third vertical robot axis Z.

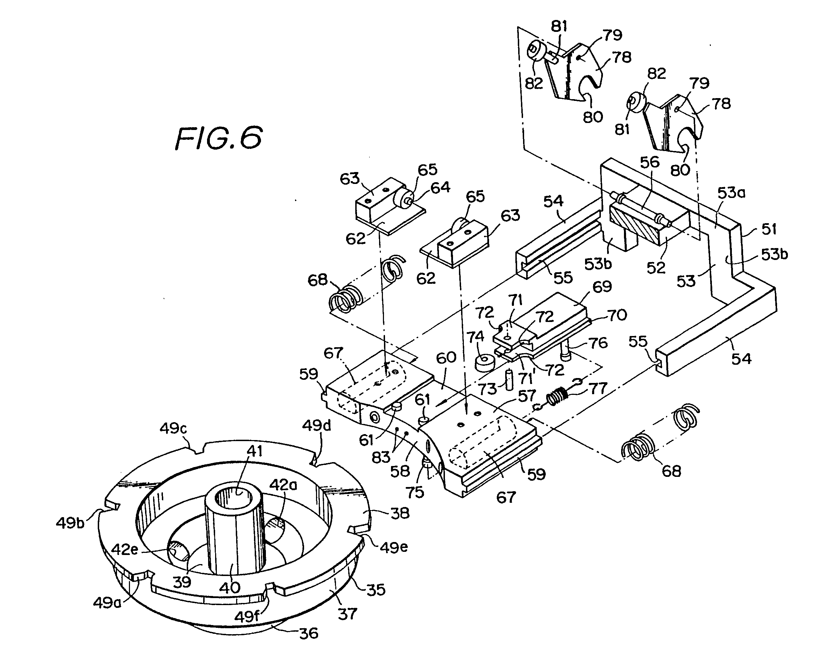

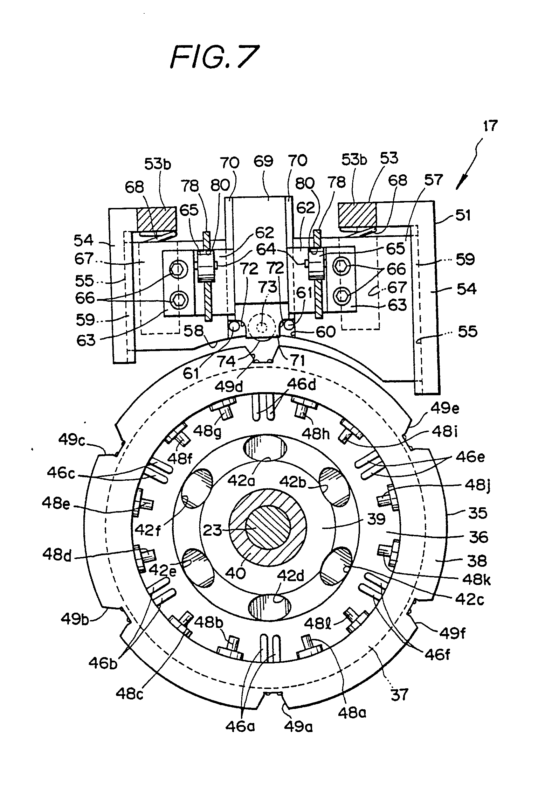

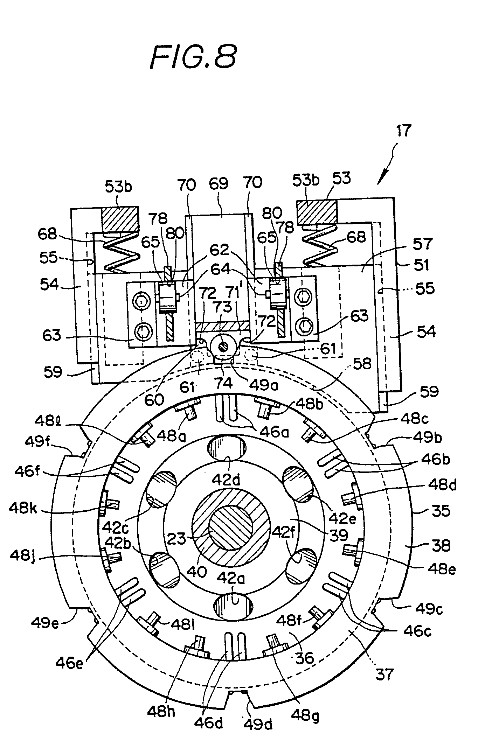

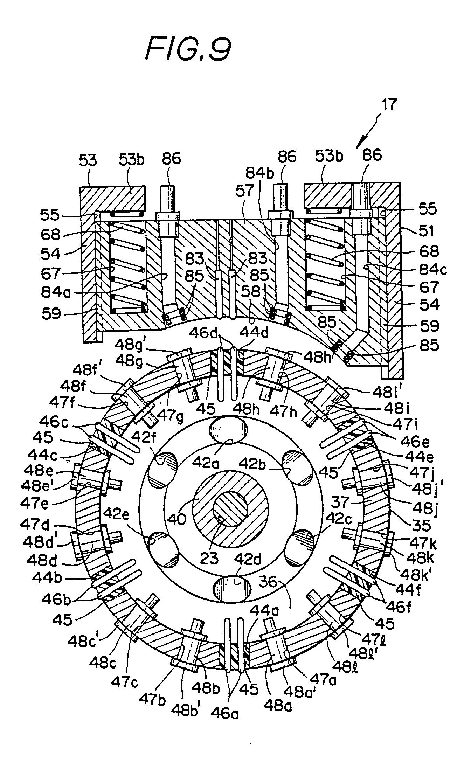

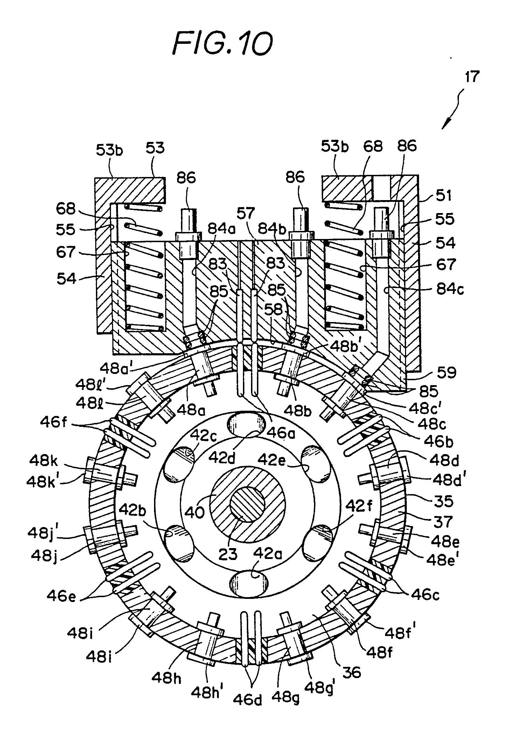

Turning now to Figures 5 to 10, a pad 57 is mounted on the end of the turret base 18 that is remote from the turret shaft 23 by means of a pad supporting frame 51, which is connected to an upward projecting section 52 of the turret base 18. The pad supporting frame 51 has a base 53 with a horizontal section 53a and a pair of vertical sections 53b extending downwardly from either end of the horizontal section 53a, and guide rails 54 extend from the lower edges of vertical sections 53b.

Guide grooves 55 are formed in the mutually opposing surfaces of the guide rails 54 and engage elongated extensions 59 of the sides of the pad 57. In this fashion, the pad 57 is movably supported along the guide rails 54 relative to the turret 35.

The pad 57 also has a curved edge 58 arranged in opposing relationship to the turret 35, and the radius of curvature of the curved edge 58 substantially matches the radius of curvature of the outer periphery of the cylindrical upward extension 37 of the turret 35. The pad 57 also has an axial groove 60 on its upper surface, and a pair of projections 61 extend vertically from the bottom of the groove 60 at points near the curved edge 58. The height of the projections 61 approximately matches the depth of the groove 60, so that the tops of the projections 61 lie flush with the upper surface of the pad 57, and pairs of threaded holes 60a are formed that open onto the upper surface of the pad 57.

A pair of substantially square plates 62 bearing support blocks 63 are fixed to the pad 57 by bolts 66 that extend through threaded holes 63a in the support blocks 63 and the square plates 62. Shafts 64 extend towards each other from opposing sides of the support blocks 63 and rotatably support rollers 65. The inner edges of the pair of square plates 62 overlap the edges of the groove 60.

A pair of holes 67 are formed in the sides of the pad 57 and each opens onto the rear face of the pad 57 that is remote from the turret 35. Coil springs 68 seat on the closed end of each of the pair of holes 67 and are almost completely accommodated therewithin. The outer ends of the coil springs 68 protrude out of the open rearward ends of the holes 67 and abut the vertical sections 53b of the pad supporting frame 51. Thus, the pad 57 is normally biased towards the turret 35 by the biasing force of the coil springs 68.

A slider 69 supported by the pad 57 is free to slide towards and away from the turret 35 and has a pair of extensions 70 projecting outwards from the longitudinal edges of its lower surface. The slider 69 also has upper and lower front tabs 71 and 71', respectively, extending forwardly from its front end. The upper and lower front tabs 71 and 71' lie parallel to each other in vertical spaced apart relationship and the forward edges of the tabs 71, 71' are trimmed to form cut-outs 72. A pin 73 extends vertically across the clearance between the upper and lower tabs 71 and 71', and engages respective holes in the upper and lower front tabs 71 and 71'. The clearance between the upper and lower front tabs 71 and 71' is slightly greater than the thickness of the flange 38 of the turret 35, and a locking roller 74 is mounted within the clearance between upper and lower front tabs 71 and 71', and is free to rotate about the pin 73.

The vertical thickness of the transverse extensions 70 of the slider 69 matches the depth of the groove 60. Therefore, the extensions 70 engage grooves bounded by groove 60 and the parts of the square plates 61 overlapping the groove 60, so that the slider 69 slides along the aforementioned guide grooves, which the transverse extensions 70 engage.

A pin 75 extends downwardly from the under surface of the pad 57 and, similarly, a pin 76 extends downwardly from the underside of the slider 69. A coil spring 77 is retained in tension between the pin 75 and the pin 76, and normally biases the slider 69 towards the turret 35 relative to the pad 57. The cut-outs 72 abut the projections 61 at the forward limit of travel of the slider 69, so that when the curved edge 58 of the pad 57 is in contact with the cylindrical extension 37 of the turret 35, the locking roller 74 engages one of the cut-outs 49a, 49b, 49c, 49d, 49e and 49f.

A pivot shaft 56 is rotatably mounted on the upward projecting section 52 of the pad supporting frame 51, and the ends of the pivot shaft 56 extend over the edges of the upward projecting section 52. A pair of locking levers 78 are mounted on the ends of the pivot shaft 56 by holes 79 formed therein and have substantially U-shaped recesses 80 that open downwardly. The downwardly opening ends of the U-shaped recesses 80 oppose the rollers 65 mounted on the pad 57, and receive the roller 65, with the edges of the recesses 80 slidingly contacting the peripheral surfaces of the rollers 65.

Mounted on each locking lever 78 is a pin 81 extending towards the stationary bevel gear 13 from the upper ends of the locking levers 78, and the upper ends of the pins 81 oppose the lower surface of the stationary bevel gear 13, as shown in Figures 2 to 4, with each pin 81 rotatably supporting a respective roller 82.

The pad 57 also has a two-element connector terminal 83 arranged on its curved edge 58 and the connector terminal 83 projects slightly beyond the surface of the curved edge 58 of the pad towards the turret 35. The connector terminal 83 makes the connection to a controller (not shown) for controlling the robot 1. The pad 57 also has a plurality of compressed air passages 84a, 84b and 84c that have larger diameter ends opposite the turret 35, and O-rings 85 serve to seal the larger diameter ends. The ends of the compressed air passages 84a, 84b and 84c remote from the turret 35 are also of increased diameter, and compressed air supply tubes 86 are connected to the ends remote from the turret 35. The compressed air supply tubes 86 are connected to a compressed air source (not shown) via a control valve (not shown) in the conventional fashion.

The connector terminal 83 and the near ends of the compressed air passages 84a, 84b and 84c are arranged to be connected respectively to one of the connector terminals 46a, 46b, 46c, 46d, 46e and 46f and to three of the compressed air passages 48a to 48l when the curved edge 58 of the pad 57 engages the outer periphery of the turret 35.

The operation of the above-described embodiment of the multi-operation industrial robot will be described below, and is directed to tool changing, movement of the pad 57 during the tool-change operation, and locking of the turret 35 by means of the locking roller 74. Turning back to Figure 2, the tool 43d is shown having just been used in a previous operation, and it is noted that when the tool 43d was in operation for performing the required operation, the vertically movable spindle 11 and the turret head 17 were in a position lower than that illustrated in Figure 2. During upward movement of the turret head 17 and the spindle 11, the rollers 82 come into contact with the lower surface of the stationary bevel gear 13 and are pushed downwardly. The downward force exerted on the rollers 82 causes the locking levers 78 to rotate clockwise, as seen in Figure 2, about the pivot shaft 56. This rotational movement of the locking levers 78 exerts a force against the coil springs 68 mounted on the pad 57 via the rollers 65 received in the recesses 80 of the locking levers 78 and, as a result, the pad 57 is shifted away from the turret 35.

This movement of the pad 57 releases the locking roller 74 mounted at the front end of the slider 69 from one of the cut-outs 49a, 49b, 49c, 49d, 49e or 49f in which it was engaged. At the same time, the connector terminal 83 separates from the corresponding connector terminals 46d, and the compressed air passages 84a, 84b and 84c separate from the corresponding compressed air passages 48g, 48h and 48i, respectively.

In the position shown in Figure 2, the robot 1 is ready to change tools 43 for use in the next operation. The controller (not shown) supplies a control signal ordering the third servo to rotate the vertically movable spindle 11 about the third vertical robot axis Z through an angle sufficient to rotate the turret 35 to move the next tool 43 to be used into its operating position. With rotation of the spindle 11 driven by the third servo, the turret base 18 and the bevel gear 31 rotate about the third vertical robot axis Z in the direction R of Figure 1. In this embodiment, because the other tool 43a is to be used in the next operation, the spindle 11 is rotated through 180° from the position shown in Figure 2. During this rotational movement of the turret base 18 about the third vertical robot axis Z, the bevel gear 31 revolves around the bevel gear 13, as it rotates about the rotation axis of the turret shaft 23. At this time, because the locking roller 74 is separated from the cut-outs 49a, 49b, 49c, 49d, 49e and 49f, the turret 35 can rotate freely. Because the bevel gears 13 and 31 are identical, have the same number of gear teeth, and are of the same diameter, the rotation of the turret 35 about the rotation axis of the turret shaft 23 matches the rotation, that is 180°, of the spindle 11. Therefore, the turret 35 rotates through 180° to move the tool 43a to the operating position.

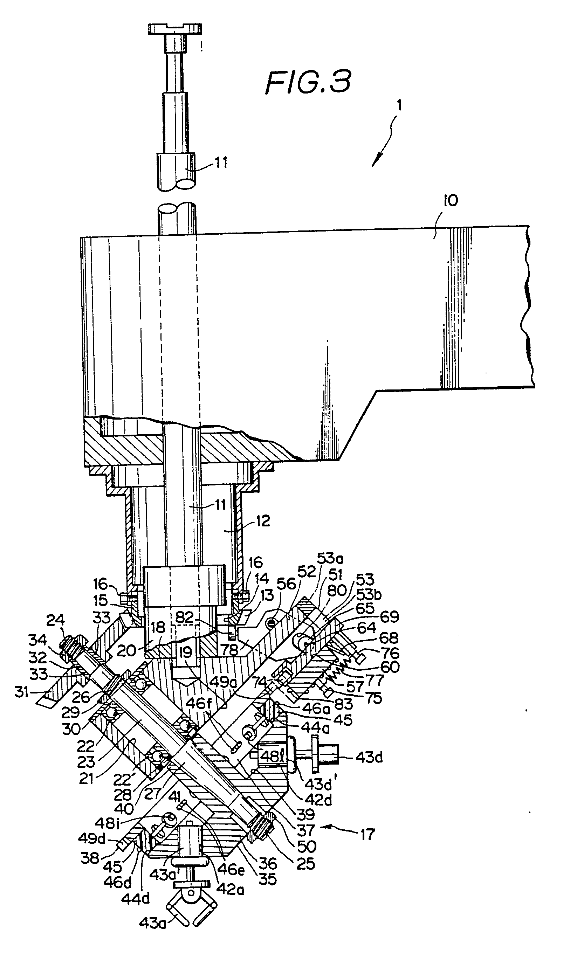

Once the tool 43a is in the operating position, as shown in Figure 3, the connector terminal 46a in the cylindrical extension 37 of the turret 35 comes into opposition with the connector terminal 83 of the pad 57. Also, at this time, the ends of the passages 48a, 48b and 48c come into opposition with the passages 84a, 84b and 84c.

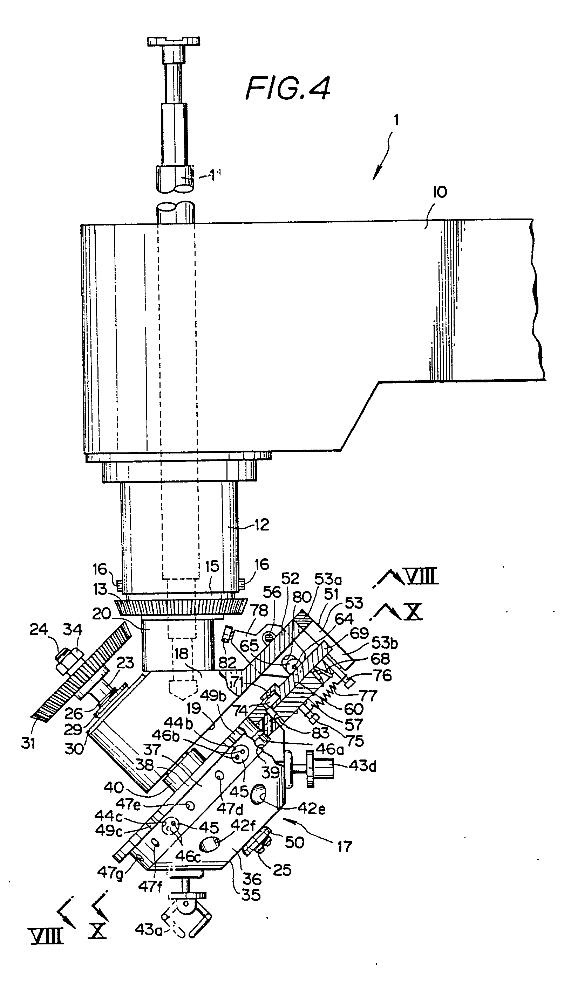

Although it is not shown in detail, an appropriate sensor may be associated with the third servo and/or the turret 35 to supply turret and/or tool position indicative signals to the controller. The controller performs feedback or feedforward robot control to position the desired tool 43 exactly to the appropriate operating position and, after precise positioning of the desired tool 43, that is, in this case, tool 43a, has been completed, the controller supplies a control signal to cause the third servo to lower the spindle 11. Lowering the spindle 11 also lowers the turret head 17 and, accordingly, the turret base 18 drops together with the bevel gear 31, to separate the bevel gears 13 and 31, as shown in Figure 4. Furthermore, during this downward movement of the turret head 18, the rollers 82 disengage from the lower surface of the stationary bevel gear 13, and the pad 57 moves towards the turret 35 under the force of the coil springs 68.

Movement of the pad 57 towards the turret 35 causes the curved edge 58 of the pad 57 to come into contact with the outer periphery of the cylindrical extension 37 of the turret 35, so that the connector terminal 83 engages the corresponding connector terminal 46a. Similarly, the compressed air passages 84a, 84b and 84c are connected to the respective corresponding compressed air passages 84a, 84b and 84c. At the same time, the locking roller 74 at the front end of the slider 69 engages the opposing cut-out 49a in the peripheral edge of the flange 38. Locking engagement between the locking roller 74 and the cut-out 49a prevents the turret 35 from rotating relative to the turret base 18.

Locking engagement between the locking roller 74 and the cut-out 49a is facilitated by the taper of the cut-outs 49. Thus, engagement between the locking roller 74 and the cut-out 49 is ensured, even when the turret 35 is slightly angularly offset from the desired angular position. If the turret 35 should be somewhat offset, a rotational force is generated by contact between the locking roller 74 and the tapered periphery of the cut-out, to correctly position the turret 35 at the desired angular position at which the tool 43a is exactly positioned in the operating position. When the locking roller 74 engages the cut-out 49a, the slider 69 is pushed backwardly relative to the pad 57, and this increases the tension on the spring 77, so that a greater spring force biases the slider 69 and the locking roller 74 towards the turret 35. This increased spring force further ensures locking engagement between the locking roller 74 and the cut-out 49a.

The controller (not shown) then supplies a control signal to cause the robot arms 6 and 10 and the spindle 11 to move the tool 42a to the next working position. At the working position of the tool 43a, the controller supplies further control signals to cause the tool 43a to rotate via the spindle 11 or via compressed air supplied through the air control valve in the compressed air passage.

It will be appreciated from the above that, because this embodiment of the multi-operation robot utilizes rotation of the vertically movable spindle 11, no extra servo system is required for tool selection. This not only helps simplify the robot structure, but also helps reduce the total weight of the moving components of the robot 1. Reducing the weight, and thus the movement of inertia of the moving components, allows higher speed of operation of the robot I.

Furthermore, the locking of the turret 35 at the desired angular position for exact alignment of the selected tool 43 to the work ensures highly accurate robot operation.

Although in the embodiment described the bevel gears 13 and 31 have been employed to convert rotation of the vertically movable spindle 11 into rotation of the turret 35 about its rotational axis, the bevel gears 13 and 31 can be replaced with friction rollers and equivalent rotation transmitting components. Furthermore, although the invention has been disclosed with respect to a specific robot with three perpendicular axes, the invention is equally applicable to other types of robot, falling within the scope defined by the claims.

## Claims

1. An industrial robot (1) for use with at least two tools (43), the robot (1) comprising:
   a frame (2);
   arm means (6, 10) pivotally supported at one end on said frame (2);
   a spindle (11) rotatably supported at an end of said arm means (6, 10) opposite to said frame (2), said spindle (11) being arranged to extend vertically from said frame (2); and
   means for rotating said spindle (11);
   characterised by:
   means for vertically moving said spindle (11);
   a turret base (18) fixed to one end of said spindle (11);
   a turret shaft (23) rotatably supported by said turret base (18);
   a turret head (17) fixed at one end of said turret shaft (23) and having said tools (43) mounted thereon;
   means (13, 31) for selectively transmitting rotational motion of said spindle (11) to said turret shaft (23), said selection being effected by vertical movement of said spindle (11), whereby said turret head (17) is rotated to select one of said tools (43);
   means (74, 78) for selectively locking said turret head (17) from rotation; and
   means (57) for releasing said locking means (74, 78) to permit rotation of said turret head (17).

2. An industrial robot according to claim 1 wherein said means (13, 31) for transmitting said rotational motion comprises a first circular gear (13) fixedly mounted on the end of said arm means (6, 10) supporting said spindle (11), a cylindrical member (12) fixed to said end of said arm means (6, 20) supporting said spindle (11), and a second circular gear (31) fixed to said turret shaft (23).

3. A robot (1) according to claim 2 wherein said turret shaft (23) is arranged to pass through said turret base (18) and said second circular gear (31) is fixed to said turret shaft (23) at an end opposite said turret head (17).

4. A robot (1) according to claim 3 wherein said first and second circular gears (13, 31) are arranged to engage at an upper limit of vertical travel of said spindle (11), whereat said locking means (74, 78) is released by said releasing means (57).

5. A robot (1) according to claim 4 wherein said locking means (74, 78) includes means for locking said turret head (17) in positions other than said upper limit of travel.

6. A robot (1) according to claim 2 wherein the number of gear teeth in each of said first and second circular gears (13, 31) are equal.

7. A robot (1) according to claim 3 further comprising means for mounting said turret shaft (23) obliquely to said spindle (11) at an angle substantially equal to 45 degrees.

8. A robot (1) according to claim 1 further comprising a plurality of first electric connector terminals (46) angularly arranged around said turret head (17), each of said plurality of first electrical connector terminals (46) being arranged in an angular position corresponding to a respective one of said plurality of tools (43), and a second electric connector terminal (46) connected to a controller of the robot (1) and releasably engageable with one of said plurality of first electrical connector terminals (46) corresponding to one of said plurality of tools (43) aligned in said working position.

9. A robot (1) according to claim 1 further comprising a plurality of first compressed air passages (48) angularly arranged around said turret head (17), each of said compressed air passages (48) being arranged at an angular position corresponding to one of said plurality of tools (43), and a second compressed air passage (84) connected to a compressed air source and releasably engageable with one of said plurality of first compressed air passages (48) corresponding to one of said plurality of tools (43) aligned in said working position.

**Patentansprüche**

1. Industrieroboter (1) für eine Anwendung mit wenigstens zwei Werkzeugen (43), wobei der Roboter (1)

ein Gestell (2), eine schwenkbar an einem Ende des Gestells (2) gehaltene Armeinrichtung (6, 10), eine drehbar an einem entgegengesetzt zum Gestell (2) liegenden Ende der Armeinrichtung (6, 10) gehaltene Spindel (11), wobei die Spindel (11) vertikal vom Gestell (2) sich erstreckend angeordnet ist, und

eine Einrichtung zum Drehen der Spindel (11) aufweist, gekennzeichnet durch

eine Einrichtung zum vertikalen Bewegen der Spindel (11), eine an einem Ende der Spindel (11) fixierte Revolverkopfbasis (18),

eine drehbar von der Revolverkopfbasis (18) gehaltene Revolverkopfwelle (23),

einen an einem Ende der Revolverkopfwelle (23) fixierten und an ihm befestigte Werkzeuge (43) aufweisenden Revolverkopf (17),

eine Einrichtung (13, 31) zum wahlweisen Übertragen einer Drehbewegung der Spindel (11) auf die Revolverkopfwelle (23), wobei die Wahl durch vertikale Bewegung der Spindel (11) bewirkt wird, wobei der Revolverkopf (17) zum Auswählen eines der Werkzeuge (43) gedreht wird,

eine Einrichtung (74, 78) zum wahlweisen Sperren des Revolverkopfes (17) gegen Drehung, und

eine Einrichtung (57) zum Freigeben der Sperreinrichtung (74, 78), um eine Drehung des Revolverkopfes (17) zu ermöglichen.

2. Industrieroboter nach Anspruch 1, wobei die Einrichtung (13, 31) zum Übertragen der Drehbewegung ein erstes, fest an dem Ende der die Spindel (11) haltenden Armeinrichtung (6, 10) befestigtes, kreisförmiges Zahnrad (13), ein an dem Ende der die Spindel (11) haltenden Armeinrichtung (6, 20) fixiertes zylindrisches Teil (12), und ein zweites, an der Revolverkopfwelle (23) fixiertes, kreisförmiges Zahnrad (31) aufweist.

3. Roboter (1) nach Anspruch 2, wobei die Revolverkopfwelle (23) so angeordnet ist, daß sie durch die Revolverkopfbasis (18) geht, und wobei das zweite kreisförmige Zahnrad (31) an der Revolverkopfwelle (23) an einem zum Revolverkopf (17) entgegengesetzten Ende fixiert ist.

4. Roboter (1) nach Anspruch 2, wobei das erste und zweite kreisförmige Zahnrad (13, 31) so angeordnet sind, daß sie an einer oberen Grenze der Hin- und Herbewegung der Spindel (11) eingreifen, wobei die Sperreinrichtung (74, 78) durch die Freigabeeinrichtung (57) freigegeben wird.

5. Roboter (1) nach Anspruch 4, wobei die Sperreinrichtung (74, 75) eine Einrichtung zum Sperren des Revolverkopfes (17) in anderen Stellungen als der oberen Grenze der Hin- und Herbewegung aufweist.

6. Roboter (1) nach Anspruch 2, wobei die Anzahl der Zahnradzähne des ersten und zweiten kreisförmigen Zahnrades (13, 31) gleich sind.

7. Roboter (1) nach Anspruch 3, der des weiteren eine Einrichtung zum Befestigen der Revolverkopfwelle (23) schräg zur Spindel (11) unter einem Winkel aufweist, der im wesentlichen gleich 45° ist.

8. Roboter (1) nach Anspruch 1, der des weiteren mehrere winkelmäßig um den Revolverkopf (17) herum angeordnete erste elektrische Verbindungsanschlüsse (46), wobei jeder der mehreren ersten elektrischen Verbindungsanschlüsse (46) in einer einem zugeordneten der mehreren Werkzeuge (43) entsprechenden Winkelposition angeordnet ist, und einen zweiten elektrischen Verbindungsanschluß (46) aufweist, der mit einem Regler des Roboters (1) verbunden und lösbar mit einem zu einem in der Arbeitsposition ausgerichteten der mehreren Werkzeuge (43) korrespondierenden der mehreren ersten elektrischen Verbindungsanschlüsse (46) in Kontakt bringbar ist.

9. Roboter (1) nach Anspruch 1, der des weiteren mehrere winkelmäßig um den Revolverkopf (17) herum angeordnete Durchgänge (48) für komprimierte Luft, wobei jeder der Durchgänge (48) für komprimierte Luft bei einer zu einem der mehreren Werkzeuge (43) korrespondierenden Winkelposition angeordnet ist, und einen zweiten Durchgang (84) für komprimierte Luft aufweist, der mit einer Quelle für komprimierte Luft verbunden und lösbar mit einem zu einem in der Arbeitsposition ausgerichteten der mehreren Werkzeuge (43) korrespondierenden der mehreren ersten Durchgänge (48) für komprimierte Luft in Eingriff bringbar ist.

## Revendications

1. Robot industriel (1) destiné à être utilisé avec au moins deux outils (43), ce robot (1) comprenant:

un bâti (2);

des moyens du genre bras (6, 10) supportés à pivotement à une extrémité dudit bâti (2);

une broche (11) supportée à rotation à une extrémité desdits moyens du genre bras (6, 10), à l'opposé dudit bâti (2), ladite broche (11) étant agencée de manière à s'étendre verticalement depuis ledit bâti (2); et

des moyens pour faire tourner ladite broche (11);

caractérisé par:

des moyens pour déplacer verticalement ladite broche (11);

une base de tourelle (18) fixée à une extrémité de ladite broche (11);

un arbre de tourelle (23) supporté à rotation par ladite base de tourelle (18);

une têtee de tourelle (17) fixée à une extrémité dudit arbre de tourelle (23) et ayant des outils (43) montés sur elle;

des moyens (13, 31) pour transmettre sélectivement un mouvement de rotation de ladite broche (11) audit arbre de tourelle (23), cette sélection étant effectuée par un mouvement vertical de ladite broche (11), ladite tête de tourelle (17) étant déplacée en rotation pour sélectionner l'un desdits outils (43);

des moyens (74, 78) pour verrouiller sélectivement ladite tête de tourelle (17) en l'empêchant de tourner; et

des moyens (57) pour libérer lesdits moyens de verrouillage (74, 78) pour permettre la rotation de ladite tête de tourelle (17).

2. Robot industriel selon revendication 1, dans lequel lesdits moyens (13, 31) pour transmettre ledit mouvement de rotation comprennent un premier organe d'engrenage circulaire (13) monté fixe sur l'extrémité desdits moyens du genre bras (6, 10) supportant ladite broche (11), un élément cylindrique (12) fixé à ladite extrémité desdits moyens du genre bras (6, 20) supportant ladite broche (11), et un deuxième organe d'engrenage circulaire (31) fixé audit arbre de tourelle (23).

3. Robot (1) selon revendication 2, dans lequel ledit arbre de tourelle (23) est agencé de manière à passer au travers de ladite base de tourelle (18), et ledit deuxième organe d'engrenage circulaire (31) est fixé audit arbre de tourelle (23) à une extrémité situé à l'opposé de ladite tête de tourelle (17).

4. Robot (1) selon revendication 3, dans lequel lesdits premier et deuxième organe d'engrenage circulaire (13, 31) sont agencés pour venir en condition d'engagement à une limite supérieure de déplacement vertical de ladite broche (11), à laquelle lesdits moyens de verrouillage (74, 78) sont libérés par lesdits moyens de libération (57).

5. Robot (1) selon revendication 4, dans lequel lesdits moyens de verrouillage (74, 78) comprennent des moyens pour verrouiller ladite tête de tourelle (17) à des positions autres que ladite limite de déplacement supérieure.

6. Robot (1) selon revendication 2, dans lequel lesdits premier et deuxième organe d'engrenage circulaire (13, 31) ont chacun le même nombre de dents d'engrenage.

7. Robot (1) selon revendication 3, comprenant en outre des moyens pour monter ledit arbre de tourelle (23) obliquement par rapport à ladite broche (11), selon un angle sensiblement égal à 45 degrés.

8. Robot (1) selon revendication 1, comprenant en outre plusieurs premières bornes de connecteur électrique (46) disposées angulairement autour de ladite tête de tourelle (17), chacune desdites premières bornes de connecteur électrique (46) étant agencée à une position angulaire correspondant à l'un desdits plusieurs outils (43), et une deuxième borne de connecteur électrique (46) reliée à un dispositif de commande du robot (1) et pouvant être amoviblement conjuguée à l'une desdites plusieurs premières bornes de connecteur électrique (46) correspondant à l'un desdits plusieurs outils (43) aligné dans ladite position de travail.

9. Robot (1) selon revendication 1, comprenant en outre plusieurs premiers passages d'air comprimé (48) disposés angulairement autour de ladite tête de tourelle (17), chacun desdits passages d'air comprimé (48) étant agencé à une position angulaire correspondant à l'un desdits plusieurs outils (43), et un deuxième passage d'air comprimé (84) relié à une source d'air comprimé et pouvant être amoviblement conjugué à l'un desdits plusieurs premiers passages d'air comprimé (48) correspondant à l'un desdits plusieurs outils (43) aligné dans ladite position de travail.

# FIG. 1

EP 0 178 944 B1

FIG.2

2

FIG.3

FIG.4

EP 0 178 944 B1

4

# FIG.5

FIG.6

EP 0 178 944 B1

# FIG.7

# FIG.8

FIG.9

# FIG.10